# EUROPEAN PATENT APPLICATION

(11) **EP 4 387 039 A1**
(43) Date of publication of application: **19.06.2024**
(21) Application number: 21957111.4
(22) Date of filing: 17.09.2021
(51) Int. Cl.: H02J 7/00

(54) **CONTROL METHOD, CONTROL APPARATUS AND ELECTRONIC DEVICE**

(71) Applicant: Huawei Digital Power Technologies Co., Ltd., Shenzhen, Guangdong 518043 (CN)
(72) Inventor: CHEN, Cheng, Shenzhen, Guangdong 518129 (CN); ZHONG, Zheng, Shenzhen, Guangdong 518129 (CN); HOU, Tianhong, Shenzhen, Guangdong 518129 (CN)
(74) Representative: Epping - Hermann - Fischer
(86) International application number: PCT/CN2021/119026
(87) International publication number: WO 2023/039826

(57) **Abstract**

This application provides a control method, a control apparatus, and an electronic device, to control a charging voltage of an energy storage system based on a lower charging voltage limit and an upper charging voltage limit, and implement intermittent float charging of the energy storage system, thereby prolonging a lifespan of the energy storage system and reducing maintenance costs of the energy storage system. In this application, a lower state of charge limit of the energy storage system may be determined based on a state of health of the energy storage system, an upper state of charge limit may be obtained based on a state of charge threshold, and the lower charging voltage limit and the upper charging voltage limit of the energy storage system may be determined based on the lower state of charge limit and the upper state of charge limit, to control the charging voltage of the energy storage system based on the lower charging voltage limit and the upper charging voltage limit.

## Description

### TECHNICAL FIELD

This application relates to the field of energy technologies, and more specifically, to a control method, a control apparatus, and an electronic device in the field of energy technologies.

### BACKGROUND

With rapid development of technologies, an energy storage system for electric energy storage has been widely used. The energy storage system mainly includes a plurality of battery units, and the plurality of battery units may provide power supply to a load in a series connection and/or parallel connection manner. The battery unit may be a lithium-ion battery, a lead-acid battery, a sodium-sulfur battery, or the like.

To provide reliable power supply to the load in a full life cycle of the battery unit, capacity redundancy configuration usually needs to be performed on the battery unit, and full-charge backup is performed on the battery unit in a use process of the battery unit. Because a lifespan of the battery unit is related to a state of charge of the battery unit, the full-charge backup usually shortens the lifespan of the battery unit.

Therefore, a technical solution that can prolong a battery lifespan is urgently required.

### SUMMARY

Embodiments of this application provide a control method, to control a charging voltage of an energy storage system, thereby prolonging a lifespan of the energy storage system.

According to a first aspect, an embodiment of this application provides a control method, which may include: determining a lower state of charge limit of an energy storage system based on a state of health (state of health, SOH) of the energy storage system through a multiplication operation, and obtaining an upper state of charge limit of the energy storage system based on a preset state of charge threshold; determining a lower charging voltage limit of the energy storage system based on the lower state of charge limit and a preset correspondence between a state of charge and a charging voltage; determining an upper charging voltage limit of the energy storage system based on the upper state of charge limit and the correspondence between a state of charge and a charging voltage; and controlling a charging voltage of the energy storage system based on the lower charging voltage limit and the upper charging voltage limit.

The state of health SOH of the energy storage system may represent a state of the energy storage system in a period from a start of life to an end of life, which is used to quantitatively describe a current performance state of the energy storage system, and is usually represented by a percentage. The preset state of charge threshold may indicate a difference between the upper state of charge limit and the lower state of charge limit. That is, based on the obtained lower state of charge limit, the lower state of charge limit may be added to the preset state of charge threshold, to obtain the upper state of charge limit.

It should be noted that the correspondence between a state of charge and a charging voltage may be obtained in advance, and the correspondence between a state of charge and a charging voltage may be presented by using a table of correspondence between a state of charge (state of charge, SOC) and a charging voltage or a relationship curve between a state of charge and a charging voltage. Certainly, the correspondence between a state of charge and a charging voltage may alternatively be presented in another form. This is not limited in this application.

It should be further noted that the correspondence between a state of charge and a charging voltage may be obtained from energy storage system parameter information provided by a manufacturer of the energy storage system, or may be obtained in another manner. This is not limited in this application.

According to the control method provided in this application, the lower state of charge limit may be determined based on the state of health of the energy storage system, the upper state of charge limit may be determined based on the lower state of charge limit, the lower charging voltage limit and the upper charging voltage limit may be respectively determined based on the lower state of charge limit and the upper state of charge limit, and the charging voltage of the energy storage system may be controlled based on the lower charging voltage limit and the upper charging voltage limit, to maintain the charging voltage between the lower charging voltage limit and the upper charging voltage limit, perform intermittent float charging on the energy storage system, and reduce the charging voltage of the energy storage system, thereby prolonging a lifespan of the energy storage system, improving safety of the energy storage system, and reducing maintenance costs.

In a possible implementation, the state of health SOH of the energy storage system may be obtained by using an ampere-hour integral method or a Kalman filtering method. Certainly, in addition to a method other than the ampere-hour integral method and the Kalman filtering method, the state of health SOH of the energy storage system may be obtained by using a method such as a discharge experiment method, an open-circuit voltage method, or a neural network method. This is not limited in this application.

In another possible implementation, in this application, a current state of charge of the energy storage system, that is, a real-time state of charge of the energy storage system, may be further obtained by using the ampere-hour integral method or the Kalman filtering method. Certainly, in addition to a method other than the ampere-hour integral method and the Kalman filtering method, the current state of charge of the energy storage system may be obtained by using a method such as a discharge experiment method, an open-circuit voltage method, or a neural network method. This is not limited in this application.

It should be noted that the current state of charge of the energy storage system may represent a ratio of a current remaining capacity of the energy storage system to a capacity of the energy storage system in a fully charged state, and is usually represented by a percentage. A value range of the current state of charge is 0 to 1. When the current state of charge is 0, it indicates that the energy storage system is completely discharged. When the current state of charge is 1, it indicates that the energy storage system is fully charged.

For example, because the state of charge of the energy storage system is closely related to the charging voltage of the energy storage system, in this application, the charging voltage of the energy storage system may be further determined based on the current state of charge and the correspondence between a state of charge and a charging voltage.

Further, the determining a lower state of charge limit of an energy storage system based on a state of health of the energy storage system through a multiplication operation may include: obtaining a backup time of the energy storage system, a rated capacity of the energy storage system, and active power of a load connected to the energy storage system; and determining the lower state of charge limit based on the backup time of the energy storage system, the rated capacity of the energy storage system, the active power of the load, and the state of health SOH of the energy storage system through the multiplication operation.

Optionally, the lower state of charge limit may be obtained by multiplying the backup time of the energy storage system, the rated capacity of the energy storage system, the active power of the load, and the state of health SOH of the energy storage system.

In a possible implementation, the controlling a charging voltage based on the lower charging voltage limit and the upper charging voltage limit may include: controlling, based on control information (which may indicate that the energy storage system needs to be charged), the energy storage system to be charged, and when the charging voltage reaches the upper charging voltage limit, stopping charging of the energy storage system; and when the charging voltage falls back to the lower charging voltage limit, controlling the energy storage system to be charged, and when the charging voltage reaches the upper charging voltage limit, stopping charging of the energy storage system.

In this application, in a process of charging the energy storage system, when the charging voltage of the energy storage system reaches the upper charging voltage limit, charging of the energy storage system may be stopped, to prevent the energy storage system from entering a fully charged state, thereby improving safety of the energy storage system.

In a possible implementation, the energy storage system may include a plurality of battery units, a plurality of battery management units, and a battery control unit, and the plurality of battery units may be connected in series to the plurality of battery management units in a one-to-one manner. Optionally, an input end of each battery management unit may be connected to a corresponding battery unit, an output end of each battery management unit may be connected to an input end of the battery control unit, and an output end of the battery control unit may be connected to each battery unit.

Based on the foregoing connection relationship, it may be determined as follows:
Each battery management unit may be configured to: obtain running information of the corresponding battery unit, and output the running information to the battery control unit. The running information of the battery unit may include at least one of a temperature, a current, and a voltage of the battery unit.

The battery control unit may be configured to: determine the control information based on running information of each battery unit, and output the control information to each battery unit.

Each battery unit may be configured to be charged based on the control information.

It should be noted that the control information may indicate that the battery unit needs to be charged, and may indicate that the battery unit needs to be discharged.

Therefore, when the control information indicates that the battery unit needs to be charged, the battery unit may be charged based on the control information. When the control information indicates that the battery unit needs to be discharged, the battery unit may be discharged based on the control information.

In an example, the plurality of battery units may be connected in parallel and/or in series. That is, the plurality of battery units may be connected in parallel or in series, or may be connected in a combination of series connection and parallel connection.

In this application, the battery control unit may control the battery unit based on the temperature, the voltage, and the current of the battery unit, to implement intelligent float charging of the battery unit, thereby prolonging a lifespan of the battery unit, and further prolonging a lifespan of the entire energy storage system.

Further, the battery unit may include one or more cells. When the battery unit includes a plurality of cells, the plurality of cells may be connected in a manner of only parallel connection, only series connection, or series and parallel connection.

According to a second aspect, this application provides a control apparatus, which may include:
an obtaining module, which may be configured to: determine a lower state of charge limit of an energy storage system based on a state of health of the energy storage system through a multiplication operation, and obtain an upper state of charge limit of the energy storage system based on a preset state of charge threshold;
a first determining module, which may be configured to determine a lower charging voltage limit of the energy storage system based on the lower state of charge limit and a preset correspondence between a state of charge and a charging voltage;
a second determining module, which may be configured to determine an upper charging voltage limit of the energy storage system based on the upper state of charge limit and the correspondence between a state of charge and a charging voltage; and
a control module, which may be configured to control a charging voltage of the energy storage system based on the lower charging voltage limit and the upper charging voltage limit.

The state of health SOH of the energy storage system may represent a state of the energy storage system in a period from a start of life to an end of life, which is used to quantitatively describe a current performance state of the energy storage system, and is usually represented by a percentage. The preset state of charge threshold may indicate a difference between the upper state of charge limit and the lower state of charge limit. That is, based on the obtained lower state of charge limit, the lower state of charge limit may be added to the preset state of charge threshold, to obtain the upper state of charge limit.

It should be noted that modules for determining a state of charge and a charging voltage may obtain the correspondence between a state of charge and a charging voltage in advance, and the correspondence between a state of charge and a charging voltage may be presented by using a table of correspondence between a state of charge and a charging voltage or a relationship curve between a state of charge and a charging voltage. Certainly, the correspondence between a state of charge and a charging voltage may alternatively be presented in another form. This is not limited in this application.

According to the control apparatus provided in this application, the lower state of charge limit may be determined based on the state of health of the energy storage system, the upper state of charge limit may be determined based on the lower state of charge limit, the lower charging voltage limit and the upper charging voltage limit may be respectively determined based on the lower state of charge limit and the upper state of charge limit, and the charging voltage of the energy storage system may be controlled based on the lower charging voltage limit and the upper charging voltage limit, to maintain the charging voltage between the lower charging voltage limit and the upper charging voltage limit, perform intermittent float charging on the energy storage system, and reduce the charging voltage of the energy storage system, thereby prolonging a lifespan of the energy storage system, improving safety of the energy storage system, and reducing maintenance costs.

In a possible implementation, the obtaining module may obtain the state of health SOH of the energy storage system by using an ampere-hour integral method or a Kalman filtering method. Certainly, in addition to a method other than the ampere-hour integral method and the Kalman filtering method, the obtaining module may obtain the state of health SOH of the energy storage system by using a method such as a discharge experiment method, an open-circuit voltage method, or a neural network method. This is not limited in this application.

In another possible implementation, the obtaining module may further obtain a current state of charge of the energy storage system by using the ampere-hour integral method or the Kalman filtering method. Certainly, in addition to a method other than the ampere-hour integral method and the Kalman filtering method, the obtaining module may obtain the current state of charge of the energy storage system by using a method such as a discharge experiment method, an open-circuit voltage method, or a neural network method. This is not limited in this application.

It should be noted that the current state of charge of the energy storage system may represent a ratio of a current remaining capacity of the energy storage system to a capacity of the energy storage system in a fully charged state, and is usually represented by a percentage. A value range of the current state of charge is 0 to 1. When the current state of charge is 0, it indicates that the energy storage system is completely discharged. When the current state of charge is 1, it indicates that the energy storage system is fully charged.

In a possible implementation, because the state of charge of the energy storage system is closely related to the charging voltage of the energy storage system, the obtaining module may be configured to determine the charging voltage of the energy storage system based on the current state of charge and the correspondence between a state of charge and a charging voltage.

In a possible implementation, the obtaining module may obtain a backup time of the energy storage system, a rated capacity of the energy storage system, and active power of a load connected to the energy storage system. The obtaining module may determine the lower state of charge limit based on the backup time of the energy storage system, the rated capacity of the energy storage system, the active power of the load, and the state of health SOH of the energy storage system through the multiplication operation.

Optionally, the first determining module may obtain the lower state of charge limit by multiplying the backup time of the energy storage system, the rated capacity of the energy storage system, the active power of the load, and the state of health SOH of the energy storage system.

In a possible implementation, the control module may control, based on control information (which may indicate that the energy storage system needs to be charged), the energy storage system to be charged, and when the charging voltage reaches the upper charging voltage limit, the control module stops charging of the energy storage system. When the charging voltage falls back to the lower charging voltage limit, the control module controls the energy storage system to be charged, and when the charging voltage reaches the upper charging voltage limit, the control module stops charging of the energy storage system.

In this application, in a process in which the control module controls charging of the energy storage system, when the charging voltage of the energy storage system reaches the upper charging voltage limit, the control module may stop charging of the energy storage system, to prevent the energy storage system from entering a full charged state, thereby improving safety of the energy storage system.

In a possible implementation, the energy storage system may include a plurality of battery units, a plurality of battery management units, and a battery control unit, and the plurality of battery units may be connected in series to the plurality of battery management units in a one-to-one manner. Optionally, an input end of each battery management unit may be coupled to a corresponding battery unit, an output end of each battery management unit may be connected to an input end of the battery control unit, and an output end of the battery control unit may be connected to each battery unit.

Based on the foregoing connection relationship, it may be determined as follows:
Each battery management unit may be configured to: obtain running information of the corresponding battery unit, and output the running information to the battery control unit. The running information of the battery unit may include at least one of a temperature, a current, and a voltage of the battery unit.

The battery control unit may be configured to: determine the control information based on running information of each battery unit, and output the control information to each battery unit.

Each battery unit may be configured to be charged based on the control information.

It should be noted that the control information may indicate that the battery unit needs to be charged, and may indicate that the battery unit needs to be discharged.

Therefore, when the control information indicates that the battery unit needs to be charged, the battery unit may be charged based on the control information. When the control information indicates that the battery unit needs to be discharged, the battery unit may be discharged based on the control information.

In an example, the plurality of battery units may be connected in parallel and/or in series. That is, the plurality of battery units may be connected in parallel or in series, or may be connected in a combination of series connection and parallel connection.

In this application, the battery control unit may control the battery unit based on the temperature, the voltage, and the current of the battery unit, to implement intelligent float charging of the battery unit, thereby prolonging a lifespan of the battery unit, and further prolonging a lifespan of the entire energy storage system.

Further, the battery unit may include one or more cells. When the battery unit includes a plurality of cells, the plurality of cells may be connected in a manner of only parallel connection, only series connection, or series and parallel connection.

According to a third aspect, this application provides an electronic device, which may include:
one or more processors; and
a memory, configured to store one or more programs, where
when the one or more programs are executed by the one or more processors, the control method provided in the first aspect and the possible implementations of the first aspect is implemented.

According to a fourth aspect, this application provides a computer-readable storage medium. The computer-readable storage medium stores instructions. When the instructions are run on a computer, the instructions are used to perform the control method provided in the first aspect and the possible implementations of the first aspect.

According to a fifth aspect, this application provides a computer program. The computer program includes instructions. When the instructions are run on a computer or a processor, the computer or the processor is enabled to implement the control method provided in the first aspect and the possible implementations of the first aspect.

It should be understood that the technical solutions in the second aspect to the fifth aspect of this application are consistent with the technical solutions in the first aspect of this application, beneficial effects achieved by the aspects and corresponding feasible implementations are similar, and details are not described again.

### BRIEF DESCRIPTION OF DRAWINGS

FIG. 1 is a schematic flowchart of an energy storage system control method according to an embodiment of this application;
FIG. 2 is an example flowchart of controlling a charging voltage based on a lower charging voltage limit and an upper charging voltage limit according to an embodiment of this application;
FIG. 3 is a schematic diagram of a process in which a charging voltage changes with time between a lower charging voltage limit and an upper charging voltage limit according to an embodiment of this application;
FIG. 4 is a diagram of comparison between a control method provided in an embodiment of this application and a control method provided in a conventional technology;
FIG. 5 is a schematic diagram of a structure of an energy storage system according to an embodiment of this application; and
FIG. 6 is a schematic diagram of a structure of a control apparatus according to an embodiment of this application.

### DESCRIPTION OF EMBODIMENTS

The following describes technical solutions of this application with reference to accompanying drawings.

To make objectives, technical solutions, and advantages of this application clearer, the following clearly and completely describes the technical solutions in this application with reference to the accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. In addition, the terms "include", "have", and any variant thereof are intended to cover non-exclusive inclusion. For example, a process, method, system, product, or device that includes a series of steps or units is not necessarily limited to those steps or units expressly listed, but may include other steps or units not expressly listed or inherent to such a process, method, system, product, or device.

It should be understood that in this application, "at least one (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

With rapid development of technologies, an energy storage system (for electric energy storage) has been widely used. A main energy storage manner of the energy storage system is chemical energy storage. The chemical energy storage may use battery units such as a lithium-ion battery, a lead-acid battery, and a sodium-sulfur battery, and the plurality of battery units may provide power supply to a load in a series connection and/or parallel connection manner.

To provide reliable power supply to a load in a full life cycle of a battery unit, capacity redundancy configuration (namely, initial over-configuration) usually needs to be performed on the battery unit. For example, if the load requires a battery unit with a capacity of 60 Ah and a backup time of 6 min to supply power to the load (that is, 60 Ah electric energy stored in the battery unit can be used for the load to run for 6 min (in other words, the electric energy stored in the battery unit is completely discharged within 6 min)), when a battery unit is configured for the load, a battery unit with a capacity greater than 60 Ah and a backup time greater than 6 min is selected. For example, a battery unit with a capacity of 100 Ah and a backup time of 10 min may be configured for the load.

In addition to the redundancy configuration on the battery unit, full-charge backup is performed on the battery unit in a use process of the battery unit, and the battery unit is kept in long-term float charging. That is, after the battery unit is discharged due to self-discharge and/or power supply to the load, the battery unit needs to be charged. In a process of charging the battery unit, the battery unit is usually fully charged. In addition, constant-voltage float charging is continuously performed on the battery unit for a long time, to compensate for a capacity loss of the battery unit, so that the battery unit can quickly recover to a state close to a full charged state after discharging.

Because a lifespan of the battery unit is related to a state of charge (when the state of charge is 1, it indicates that the battery unit is in a fully charged state) of the battery unit, the full-charge backup usually shortens the lifespan of the battery unit.

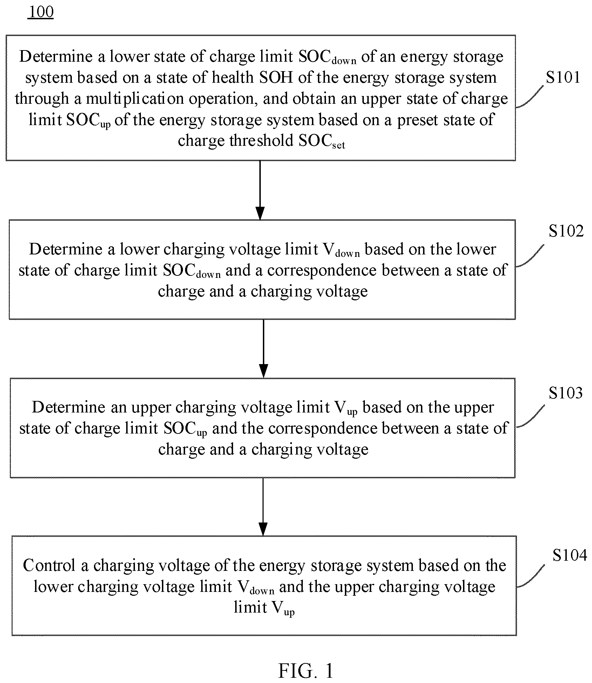

The energy storage system usually includes a plurality of battery units, and lifespans of the battery units determine a lifespan of the energy storage system. To prolong the lifespan of the energy storage system, an embodiment of this application provides an energy storage system control method, as shown in FIG. 1. A control process 100 is described as a series of steps or operations. It should be understood that the control process 100 may be executed in various sequences and/or simultaneously, and is not limited to an execution sequence shown in FIG. 1.

Step S101: Determine a lower state of charge limit (which may be represented by SOC_{down}) of an energy storage system based on a state of health SOH of the energy storage system through a multiplication operation, and obtain an upper state of charge limit (which may be represented by SOCᵤₚ) of the energy storage system based on a preset state of charge threshold (which may be represented by SOCₛₑₜ).

The state of health SOH of the energy storage system may represent a state of the energy storage system in a period from a start of life to an end of life, which is used to quantitatively describe a current performance state of the energy storage system, and is usually represented by a percentage. Optionally, the state of charge threshold SOCₛₑₜ may indicate a difference between the upper state of charge limit SOCᵤₚ and the lower state of charge limit SOC_{down}, that is, SOCₛₑₜ=SOCᵤₚ-SOC_{down}. To be specific, based on the obtained lower state of charge limit SOC_{down}, the lower state of charge limit SOC_{down} may be added to the preset state of charge threshold SOCₛₑₜ, to obtain the upper state of charge limit SOCᵤₚ.

It should be noted that the state of charge threshold SOCₛₑₜ may be set based on an actual application scenario of the energy storage system.

For example, the state of charge threshold SOCₛₑₜ is set to 5%. Therefore, if the obtained lower state of charge limit SOC_{down} is 60%, the upper state of charge limit SOCᵤₚ may be 65%.

For another example, the state of charge threshold SOCₛₑₜ is set to 10%. Therefore, if the obtained lower state of charge limit SOC_{down} is 60%, the upper state of charge limit SOCᵤₚ may be 70%.

It may be understood that, in the first H (for example, the first 300) charge/discharge cycles of the energy storage system, the upper state of charge limit SOCᵤₚ may be less than a maximum state of charge of the energy storage system. However, as a lifespan of the energy storage system is attenuated (due to a side reaction between an electrode material and an electrolyte of an energy storage module in the energy storage system), in the (H+1)^{th} to (2H)^{th} (for example, the 301^{st} to 600^{th}) charge/discharge cycles of the energy storage system, the upper state of charge limit SOCᵤₚ may be equal to the maximum state of charge of the energy storage system.

Step S102: Determine a lower charging voltage limit (which may be represented by V_{down}) of the energy storage system based on the lower state of charge limit SOC_{down} and a preset correspondence between a state of charge and a charging voltage.

The correspondence between a state of charge and a charging voltage may be obtained in advance, and the correspondence between a state of charge and a charging voltage may be presented by using a table of correspondence between a state of charge and a charging voltage or a relationship curve between a state of charge and a charging voltage. Certainly, the correspondence between a state of charge and a charging voltage may alternatively be presented in another form. This is not limited in this embodiment of this application. This embodiment of this application is described by using an example in which the correspondence between a state of charge and a charging voltage is the relationship curve between a state of charge and a charging voltage.

For example, when the energy storage system is used in to a data center, and the energy storage system is in a fully charged state, a charging voltage of the energy storage system is 544 V When the lower state of charge limit SOC_{down} is 60%, based on the relationship curve obtained in advance between a state of charge and a charging voltage, it may be determined that the lower charging voltage limit V_{down} is 512 V. Similarly, when the upper state of charge limit SOCᵤₚ is 65%, based on the relationship curve obtained in advance between a state of charge and a charging voltage, it may be determined that an upper charging voltage limit Vᵤₚ is 520 V

It should be further noted that the correspondence between a state of charge and a charging voltage may be obtained from energy storage system parameter information provided by a manufacturer of the energy storage system, or may be obtained in another manner. This is not limited in this application.

Step S103: Determine an upper charging voltage limit (which may be represented by Vᵤₚ) of the energy storage system based on the upper state of charge limit SOCᵤₚ and the correspondence (refer to the foregoing description) between a state of charge and a charging voltage.

It may be understood that the lower charging voltage limit V_{down} may be less than the upper charging voltage limit Vᵤₚ.

Step S104: Control a charging voltage (which may be represented by V) of the energy storage system based on the lower charging voltage limit V_{down} and the upper charging voltage limit Vᵤₚ. In this embodiment of this application, the lower state of charge limit is determined based on the state of health of the energy storage system, the upper state of charge limit is determined based on the lower state of charge limit, the lower charging voltage limit and the upper charging voltage limit are respectively determined based on the lower state of charge limit and the upper state of charge limit, and the charging voltage of the energy storage system is controlled based on the lower charging voltage limit and the upper charging voltage limit, to maintain the charging voltage between the lower charging voltage limit and the upper charging voltage limit, perform intermittent float charging on the energy storage system, reduce the charging voltage of the energy storage system, and control intercalation/deintercalation of the electrode material inside the energy storage module (when the energy storage module is charged, positive ions (such as lithium ions) deintercalate to release electrons, and negative ions intercalate to obtain electrons; on the contrary, when the energy storage module is discharged, the positive ions intercalate to obtain electrons, and the negative ions deintercalate to release electrons), thereby reducing activity of the side reaction on a surface of the electrode material, prolonging the lifespan of the energy storage system, and reducing maintenance costs.

In addition, according to the control method provided in this embodiment of this application, the energy storage system runs in a relatively low state of charge (that is, 60% to 65%), thereby improving safety of the energy storage system.

In a possible implementation, in this embodiment of this application, the state of health SOH of the energy storage system may be obtained by using an ampere-hour integral method or a Kalman filtering method. Certainly, in addition to a method other than the ampere-hour integral method and the Kalman filtering method, in this embodiment of this application, the state of health SOH may be obtained by using a method such as a discharge experiment method, an open-circuit voltage method, or a neural network method. This is not limited in this embodiment of this application.

Optionally, when the state of health SOH of the energy storage system is obtained, in this embodiment of this application, a current state of charge of the energy storage system may be further obtained by using the ampere-hour integral method or the Kalman filtering method. Certainly, in addition to a method other than the ampere-hour integral method and the Kalman filtering method, in this embodiment of this application, the current state of charge of the energy storage system may be obtained by using a method such as a discharge experiment method, an open-circuit voltage method, or a neural network method. This is not limited in this embodiment of this application.

It should be noted that the current state of charge of the energy storage system may represent a ratio of a current remaining capacity of the energy storage system to a capacity of the energy storage system in a fully charged state, and is usually represented by a percentage. A value range of the current state of charge is 0 to 1. When the current state of charge is 0, it indicates that the energy storage system is completely discharged. When the current state of charge is 1, it indicates that the energy storage system is fully charged.

Further, because the state of charge of the energy storage system is closely related to the charging voltage of the energy storage system, in this embodiment of this application, the charging voltage V may be determined based on the current state of charge and the correspondence between a state of charge and a charging voltage.

In a possible implementation, the lower state of charge limit SOC_{down} may be determined based on the following steps.

Step S101a: Obtain a backup time (which may be represented by t) of the energy storage system, a rated capacity (which may be represented by Q) of the energy storage system, and active power (which may be represented by P) of a load connected to the energy storage system.

Optionally, the backup time t and the rated capacity Q of the energy storage system may be obtained from the energy storage system parameter information, and the active power P of the load may be obtained based on load parameter information provided by a manufacturer of the load.

Step S101b: Determine the lower state of charge limit SOC_{down} based on the backup time t of the energy storage system, the rated capacity Q of the energy storage system, the active power P of the load, and the state of health SOH of the energy storage system through the multiplication operation.

Optionally, the lower state of charge limit SOC_{down} may be obtained by multiplying the backup time t of the energy storage system, the rated capacity Q of the energy storage system, the active power P of the load, and the state of health SOH of the energy storage system.

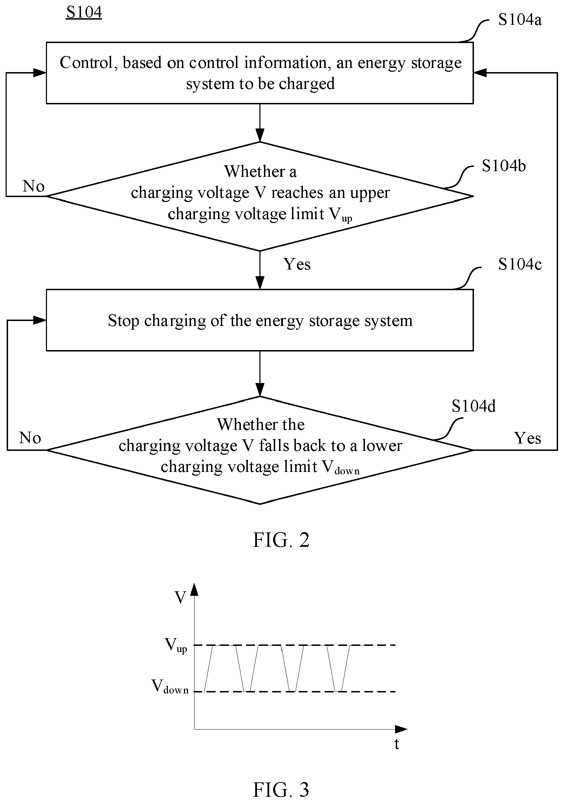

In a possible implementation, as shown in FIG. 2, step S104 may be implemented based on the following steps.

Step S104a: Control, based on control information (which may indicate that the energy storage system needs to be charged), the energy storage system to be charged.

Step S104b: Determine whether the charging voltage V reaches the upper charging voltage limit Vᵤₚ; and if the charging voltage V reaches the upper charging voltage limit Vᵤₚ, perform step S104c; otherwise, return to step S104a.

Step S 104c: Stop charging of the energy storage system. That is, when the charging voltage V reaches the upper charging voltage limit Vᵤₚ, charging of the energy storage system is stopped.

Step S104d: Determine whether the charging voltage V falls back to the lower charging voltage limit V_{down}; and if the charging voltage V falls back to the lower charging voltage limit V_{down}, perform step S104a; otherwise, return to step S 104c.

FIG. 3 shows a process in which the charging voltage V of the energy storage system changes with the time t between the lower charging voltage limit V_{down} and the upper charging voltage limit Vᵤₚ. It can be learned from FIG. 3 that intermittent float charging of the energy storage system is implemented based on the lower charging voltage limit V_{down} and the upper charging voltage limit Vᵤₚ.

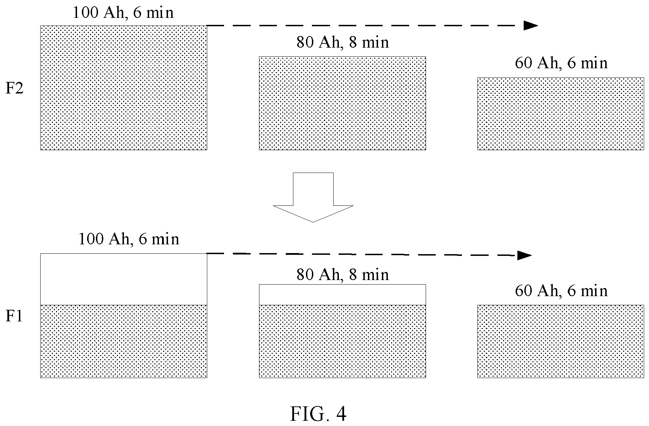

FIG. 4 is a diagram of comparison between a control method (F1 in FIG. 4) provided in an embodiment of this application and a control method (F2 in FIG. 4) provided in a conventional technology.

It can be learned from FIG. 4 that, if a load needs a battery unit with a capacity of 60 Ah and a backup time of 6 min to supply power to the load, in the control method provided in the conventional technology, a capacity of the energy storage system is configured to 100 Ah, and a backup time is configured to 10 min, that is, the capacity of the energy storage system is over-configured. In addition, the energy storage system is fully charged in float charging in an entire life cycle, that is, provided that a state of charge SOC of the energy storage system decreases, the energy storage system is kept in a fully charged state through float charging.

For example, when the lifespan of the energy storage system has a capacity of 100 Ah and a backup time of 10 min (that is, the initial configuration), provided that the state of charge SOC of the energy storage system decreases, the capacity of the energy storage system reaches 100 Ah through float charging, and correspondingly, the backup time of the energy storage system reaches 10 min. For another example, when the lifespan of the energy storage system is attenuated to a capacity of 80 Ah and a backup time of 8 min, provided that the state of charge SOC of the energy storage system decreases, the capacity of the energy storage system reaches 80 Ah through float charging, and correspondingly, the backup time of the energy storage system reaches 8 min.

For still another example, when the lifespan of the energy storage system is attenuated to a capacity of 60 Ah and a backup time of 6 min, provided that the state of charge SOC of the energy storage system decreases, the capacity of the energy storage system reaches 60 Ah through float charging, and correspondingly, the backup time of the energy storage system reaches 6 min.

It should be noted that, when the lifespan of the energy storage system is attenuated to the capacity of 60 Ah and the backup time of 6 min, it indicates that the lifespan of the energy storage system has reached an end. When the energy storage system is controlled by using the control method of the conventional technology, the lifespan of the energy storage system is 10 years.

It can be further learned from FIG. 4 that, for the same load (which needs a battery unit with a capacity of 60 Ah and a backup time of 6 min to supply power to the load), in the control method provided in this embodiment of this application, the capacity of the energy storage system is also over-configured (that is, the capacity of the energy storage system is configured to 100 Ah, and the backup time is 10 min). However, in this embodiment of this application, the energy storage system is not fully charged in float charging in the entire life cycle, but intelligent float charging is performed on the energy storage system based on the state of charge SOC.

For example, when the lifespan of the energy storage system has a capacity of 100 Ah and a backup time of 10 min (that is, the initial configuration), intelligent float charging is performed on the energy storage system because the load needs only a battery unit with a capacity of 60 Ah and a backup time of 6 min to supply power to the load. That is, when the energy storage system is charged, when the capacity of the energy storage system reaches 65 Ah and the backup time reaches 6.5 min, charging of the energy storage system may be stopped. In addition, when the capacity of the energy storage system falls back to 60 Ah and the backup time is 6 min, the energy storage system is charged, so that the capacity of the energy storage system rises back to 65 Ah and the backup time reaches 6.5 min again, and then charging of the energy storage system may be stopped.

For another example, when the lifespan of the energy storage system is attenuated to a capacity of 80 Ah and a backup time of 8 min, intelligent float charging is performed on the energy storage system because the load needs only a battery unit with a capacity of 60 Ah and a backup time of 6 min to supply power to the load. That is, when the energy storage system is charged, when the capacity of the energy storage system reaches 65 Ah and the backup time reaches 6.5 min, charging of the energy storage system may be stopped. In addition, when the capacity of the energy storage system falls back to 60 Ah and the backup time is 6 min, the energy storage system is charged, so that the capacity of the energy storage system rises back to 65 Ah and the backup time reaches 6.5 min again, and then charging of the energy storage system may be stopped.

For still another example, when the lifespan of the energy storage system is attenuated to a capacity of 60 Ah and a backup time of 6 min, because the load needs a battery unit with a capacity of 60 Ah and a backup time of 6 min to supply power to the load, the energy storage system is charged, and when the capacity of the energy storage system reaches 60 Ah and the backup time is 6 min, charging of the energy storage system is stopped.

It should be noted that, when the lifespan of the energy storage system is attenuated to the capacity of 60 Ah and the backup time of 6 min, it indicates that the lifespan of the energy storage system has reached an end. When the energy storage system is controlled by using the control method provided in this embodiment of this application, the lifespan of the energy storage system is 15 years.

In conclusion, according to the control method provided in this embodiment of this application, the lifespan of the energy storage system can be prolonged, thereby reducing maintenance costs of the energy storage system.

Optionally, in this embodiment of this application, on a premise of ensuring reliable power supply to the load, the initial configuration of the energy storage system may be further reduced (for example, the capacity of the energy storage system is configured to 80 Ah, and the backup time is configured to 8 min). Compared with the capacity of 100 Ah and the backup time of 8 min in the conventional technology, a discharge capacity of the energy storage system in the full life cycle can be increased, and initial investment costs of the energy storage system can be reduced.

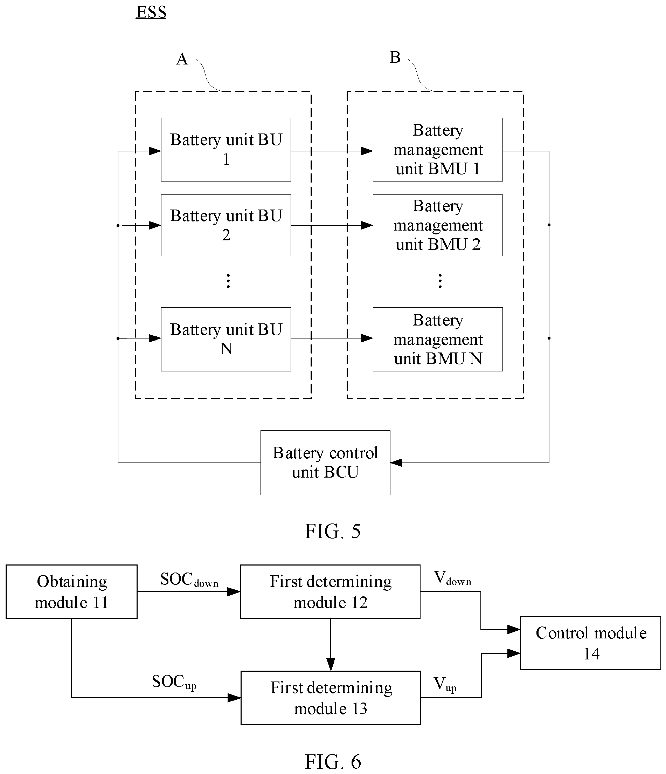

In a possible implementation, as shown in FIG. 5, the energy storage system (energy storage system, ESS) may include a plurality of battery units A (including a total of N battery units: a battery unit (battery unit, BU) 1, a battery unit BC 2, ..., and a battery unit BC N in FIG. 5, where the N battery units may be connected in a manner of only parallel connection, only series connection, or series and parallel connection), a plurality of battery management units B (including a total of N battery management units: a battery management unit (battery management unit, BMU) 1, a battery management unit BMU 2, ..., and a battery management unit BMU N, where each battery management unit has a sampling and equalization circuit, and has a function of obtaining a temperature, a voltage, and a current of a corresponding battery unit), and a battery control unit (battery control unit, BCU, which has a function of controlling charging and discharging of the battery unit, and can adjust a charging state and a discharging state of the battery unit in real time). Optionally, the N battery units are connected in series to the N battery management units in a one-to-one manner.

For example, the battery unit BC 1 is correspondingly connected in series to the battery management unit BMU 1.

For another example, the battery unit BC 2 is correspondingly connected in series to the battery management unit BMU 2.

For still another example, the battery unit BC N is correspondingly connected in series to the battery management unit BMU N.

Refer to FIG. 5. An input end of each battery management unit may be coupled to a corresponding battery unit, an output end of each battery management unit may be connected to an input end of the battery control unit, and an output end of the battery control unit may be connected to each battery unit.

For example, an input end of the battery management unit BMU 1 may be connected to the battery unit BC 1, an output end of the battery management unit BMU 1 may be connected to an input end of the battery control unit BCU, and an output end of the battery control unit BCU may be connected to the battery unit BC 1.

For another example, an input end of the battery management unit BMU 2 may be connected to the battery unit BC 2, an output end of the battery management unit BMU 2 may be connected to the input end of the battery control unit BCU, and the output end of the battery control unit BCU may be connected to the battery unit BC 2.

For still another example, an input end of the battery management unit BMU N may be connected to the battery unit BC N, an output end of the battery management unit BMU N may be connected to the input end of the battery control unit BCU, and the output end of the battery control unit BCU may be connected to the battery unit BC N.

Based on the foregoing connection relationship, it may be determined as follows:
Each battery management unit (for example, the battery management unit BMU 1) may be configured to: obtain running information of the corresponding battery unit (for example, the battery unit BC 1), and output the running information to the battery control unit BCU.

The battery control unit BCU may be configured to: determine the control information based on running information of each battery unit (for example, the battery unit BC 1), and output the control information to each battery unit (for example, the battery unit BC 1).

The running information of each battery unit (for example, the battery unit BC 1) may include at least one of a temperature, a current, and a voltage of the battery unit.

Each battery unit (for example, the battery unit BC 1) may be configured to be charged based on the control information from the battery control unit BCU.

It should be noted that the control information may indicate that the battery unit (for example, the battery unit BC 1) needs to be charged, and may indicate that the battery unit (for example, the battery unit BC 1) needs to be discharged.

Therefore, when the control information indicates that the battery unit (for example, the battery unit BC 1) needs to be charged, the battery unit (for example, the battery unit BC 1) may be charged based on the control information. When the control information output by the battery control unit BCU to the battery unit (for example, the battery unit BC 1) indicates that the battery unit (for example, the battery unit BC 1) needs to be discharged, the battery unit (for example, the battery unit BC 1) may be discharged based on the control information.

It can be learned that, the battery control unit BCU may control the battery unit based on the temperature, the voltage, and the current of the battery unit, to implement intelligent float charging of the battery unit, thereby prolonging a lifespan of the battery unit, and further prolonging the lifespan of the entire energy storage system.

Further, the battery unit (for example, the battery unit BC 1) may include one or more cells. When the battery unit includes a plurality of cells, the plurality of cells may be connected in a manner of only parallel connection, only series connection, or series and parallel connection.

Optionally, in addition to intelligent float charging performed on the plurality of battery units by using the battery control unit BCU, intelligent float charging may be implemented on an entire battery system by controlling the battery control unit BCU by a master computer coupled to the energy storage system.

An embodiment of this application further provides a control apparatus, as shown in FIG. 6. The control apparatus 1 includes an obtaining module 11, a first determining module 12, a second determining module 13, and a control module 14. The obtaining module 11 may be connected to the first determining module 12 and the second determining module 13, and the first determining module 12 and the second determining module 13 may be connected to the control module 14. Based on the foregoing connection relationship, it may be determined as follows:
The obtaining module 11 may be configured to: determine a lower state of charge limit SOC_{down} of an energy storage system based on a state of health SOH of the energy storage system through a multiplication operation, and obtain an upper state of charge limit SOCᵤₚ of the energy storage system based on a preset state of charge threshold SOCₛₑₜ.

The first determining module 12 may be configured to determine a lower charging voltage limit V_{down} of the energy storage system based on the lower state of charge limit SOC_{down} and a preset correspondence between a state of charge and a charging voltage.

The second determining module 13 may be configured to determine an upper charging voltage limit Vᵤₚ of the energy storage system based on the lower state of charge limit SOCᵤₚ and the preset correspondence between a state of charge and a charging voltage.

The control module 14 may be configured to control a charging voltage V of the energy storage system based on the lower charging voltage limit V_{down} and the upper charging voltage limit Vᵤₚ. The state of health SOH of the energy storage system may represent a state of the energy storage system in a period from a start of life to an end of life, which is used to quantitatively describe a current performance state of the energy storage system, and is usually represented by a percentage. Optionally, the state of charge threshold SOCₛₑₜ may indicate a difference between the upper state of charge limit SOCᵤₚ and the lower state of charge limit SOC_{down}, that is, SOCₛₑₜ=SOCᵤₚ-SOC_{down}. That is, based on the obtained lower state of charge limit SOC_{down}, the lower state of charge limit SOC_{down} may be added to the preset state of charge threshold SOCₛₑₜ, to obtain the upper state of charge limit SOCᵤₚ.

It should be noted that the state of charge threshold SOCₛₑₜ may be set based on an actual application scenario of the energy storage system.

For example, the state of charge threshold SOCₛₑₜ is set to 5%. Therefore, if the obtained lower state of charge limit SOC_{down} is 60%, the upper state of charge limit SOCᵤₚ may be 65%.

For another example, the state of charge threshold SOCₛₑₜ is set to 10%. Therefore, if the obtained lower state of charge limit SOC_{down} is 60%, the upper state of charge limit SOCᵤₚ may be 70%.

It may be understood that, in the first H (for example, the first 300) charge/discharge cycles of the energy storage system, the upper state of charge limit SOCᵤₚ may be less than a maximum state of charge of the energy storage system. However, as a lifespan of the energy storage system is attenuated (due to a side reaction between an electrode material and an electrolyte of an energy storage module in the energy storage system), in the (H+1)^{th} to (2H)^{th} (for example, the 301^{st} to 600^{th}) charge/discharge cycles of the energy storage system, the upper state of charge limit SOCᵤₚ may be equal to the maximum state of charge of the energy storage system.

The first determining module 12 may obtain the correspondence between a state of charge and a charging voltage in advance, and the correspondence between a state of charge and a charging voltage may be presented by using a table of correspondence between a state of charge and a charging voltage or a relationship curve between a state of charge and a charging voltage. Certainly, the correspondence between a state of charge and a charging voltage may alternatively be presented in another form. This is not limited in this embodiment of this application. This embodiment of this application is described by using an example in which the correspondence between a state of charge and a charging voltage is the relationship curve between a state of charge and a charging voltage.

For example, when the energy storage system is used in a data center, and the energy storage system is in a fully charged state, a charging voltage of the energy storage system is 544 V When the lower state of charge limit SOC_{down} is 60%, based on the relationship curve obtained in advance between a state of charge and a charging voltage, it may be determined that the lower charging voltage limit V_{down} is 512 V. Similarly, when the upper state of charge limit SOCᵤₚ is 65%, based on the relationship curve obtained in advance between a state of charge and a charging voltage, it may be determined that the upper charging voltage limit Vᵤₚ is 520 V

It should be further noted that the first determining module 12 may obtain the correspondence between a state of charge and a charging voltage from energy storage system parameter information provided by a manufacturer of the energy storage system, or in another manner. This is not limited in this application.

According to the control apparatus provided in this embodiment of this application, the lower state of charge limit may be determined based on the state of health of the energy storage system, the upper state of charge limit may be determined based on the lower state of charge limit, the lower charging voltage limit and the upper charging voltage limit may be respectively determined based on the lower state of charge limit and the upper state of charge limit, and the charging voltage of the energy storage system may be controlled based on the lower charging voltage limit and the upper charging voltage limit, to maintain the charging voltage between the lower charging voltage limit and the upper charging voltage limit, perform intermittent float charging on the energy storage system, and reduce the charging voltage of the energy storage system, thereby prolonging the lifespan of the energy storage system, improving safety of the energy storage system, and reducing maintenance costs.

In a possible implementation, the obtaining module 11 may obtain the state of health SOH of the energy storage system by using an ampere-hour integral method or a Kalman filtering method. Certainly, in addition to a method other than the ampere-hour integral method and the Kalman filtering method, the obtaining module 11 may obtain the state of health SOH of the energy storage system by using a method such as a discharge experiment method, an open-circuit voltage method, or a neural network method. This is not limited in this embodiment of this application.

In another possible implementation, the obtaining module 11 may further obtain a current state of charge of the energy storage system by using the ampere-hour integral method or the Kalman filtering method. Certainly, in addition to a method other than the ampere-hour integral method and the Kalman filtering method, the obtaining module 11 may obtain the current state of charge of the energy storage system by using a method such as a discharge experiment method, an open-circuit voltage method, or a neural network method. This is not limited in this embodiment of this application.

It should be noted that the current state of charge of the energy storage system may represent a ratio of a current remaining capacity of the energy storage system to a capacity of the energy storage system in a fully charged state, and is usually represented by a percentage. A value range of the current state of charge is 0 to 1. When the current state of charge is 0, it indicates that the energy storage system is completely discharged. When the current state of charge is 1, it indicates that the energy storage system is fully charged.

In a possible implementation, because the state of charge of the energy storage system is closely related to the charging voltage of the energy storage system, after the obtaining module 11 obtains the current state of charge of the energy storage system, the obtaining module 11 may determine the charging voltage V of the energy storage system based on the current state of charge of the energy storage system and the correspondence obtained by the first determining module 12 between a state of charge of the energy storage system and a charging voltage. After obtaining the charging voltage V of the energy storage system, the obtaining module 11 may output the charging voltage V of the energy storage system to the control module 14.

Further, the obtaining module 11 may obtain a backup time t of the energy storage system and a rated capacity Q of the energy storage system (from the energy storage system parameter information), and may obtain active power P of a load connected to the energy storage system (from load parameter information provided by a manufacturer). Then, the obtaining module 11 may determine the lower state of charge limit SOC_{down} based on the backup time t of the energy storage system, the rated capacity Q of the energy storage system, the active power P of the load, and the state of health SOH of the energy storage system through the multiplication operation.

Optionally, the obtaining module 11 may obtain the lower state of charge limit SOC_{down} by multiplying the backup time t of the energy storage system, the rated capacity Q of the energy storage system, the active power P of the load, and the state of health SOH of the energy storage system.

In a possible implementation, the control module 14 may control, based on control information (which may indicate that the energy storage system needs to be charged), the energy storage system to be charged. The control module 14 determines whether the charging voltage V reaches the upper charging voltage limit Vᵤₚ; and if the charging voltage V reaches the upper charging voltage limit Vᵤₚ, stops charging of the energy storage system; otherwise, continues to control the energy storage system to be charged, and when the charging voltage V reaches the upper charging voltage limit Vᵤₚ, stops charging of the energy storage system.

As the energy storage system is discharged due to self-discharge and/or power supply to the load, the charging voltage V falls back. Therefore, further, the control module 14 may determine whether the charging voltage V falls back to the lower charging voltage limit V_{down}; and if the charging voltage V falls back to the lower charging voltage limit V_{down}, control the energy storage system to be charged, and after the charging voltage V rises back to the upper charging voltage limit Vᵤₚ, stop charging of the energy storage system.

For a process in which the charging voltage V of the energy storage system changes with the time t, refer to FIG. 3. It can be learned from FIG. 3 that intermittent float charging of the energy storage system is implemented based on the lower charging voltage limit V_{down} and the upper charging voltage limit Vᵤₚ.

In a possible implementation, with reference to FIG. 5, the energy storage system (energy storage system, ESS) may include a plurality of battery units A (including a total of N battery units: a battery unit (battery unit, BU) 1, a battery unit BC 2, ..., and a battery unit BC N in FIG. 5, where the N battery units may be connected in a manner of only parallel connection, only series connection, or series and parallel connection), a plurality of battery management units B (including a total of N battery management units: a battery management unit (battery management unit, BMU) 1, a battery management unit BMU 2, ..., and a battery management unit BMU N, where each battery management unit has a sampling and equalization circuit, and has a function of obtaining a temperature, a voltage, and a current of a corresponding battery unit), and a battery control unit (battery control unit, BCU, which has a function of controlling charging and discharging of the battery unit, and can adjust a charging state and a discharging state of the battery unit in real time). Optionally, the N battery units are connected in series to the N battery management units in a one-to-one manner.

For example, the battery unit BC 1 is correspondingly connected in series to the battery management unit BMU 1.

For another example, the battery unit BC 2 is correspondingly connected in series to the battery management unit BMU 2.

For still another example, the battery unit BC N is correspondingly connected in series to the battery management unit BMU N.

Refer to FIG. 5. An input end of each battery management unit may be coupled to a corresponding battery unit, an output end of each battery management unit may be connected to an input end of the battery control unit, and an output end of the battery control unit may be connected to each battery unit.

For example, an input end of the battery management unit BMU 1 may be connected to the battery unit BC 1, an output end of the battery management unit BMU 1 may be connected to an input end of the battery control unit BCU, and an output end of the battery control unit BCU may be connected to the battery unit BC 1.

For another example, an input end of the battery management unit BMU 2 may be connected to the battery unit BC 2, an output end of the battery management unit BMU 2 may be connected to the input end of the battery control unit BCU, and the output end of the battery control unit BCU may be connected to the battery unit BC 2.

For still another example, an input end of the battery management unit BMU N may be connected to the battery unit BC N, an output end of the battery management unit BMU N may be connected to the input end of the battery control unit BCU, and the output end of the battery control unit BCU may be connected to the battery unit BC N.

Based on the foregoing connection relationship, it may be determined as follows:
Each battery management unit (for example, the battery management unit BMU 1) may be configured to: obtain running information of the corresponding battery unit (for example, the battery unit BC 1), and output the running information to the battery control unit BCU.

The battery control unit BCU may be configured to: determine the control information based on running information of each battery unit (for example, the battery unit BC 1), and output the control information to each battery unit (for example, the battery unit BC 1).

The running information of each battery unit (for example, the battery unit BC 1) may include at least one of a temperature, a current, and a voltage of the battery unit.

Each battery unit (for example, the battery unit BC 1) may be configured to be charged based on the control information from the battery control unit BCU.

It should be noted that the control information may indicate that the battery unit (for example, the battery unit BC 1) needs to be charged, and may indicate that the battery unit (for example, the battery unit BC 1) needs to be discharged.

Therefore, when the control information indicates that the battery unit (for example, the battery unit BC 1) needs to be charged, the battery unit (for example, the battery unit BC 1) may be charged based on the control information. When the control information output by the battery control unit BCU to the battery unit (for example, the battery unit BC 1) indicates that the battery unit (for example, the battery unit BC 1) needs to be discharged, the battery unit (for example, the battery unit BC 1) may be discharged based on the control information.

It can be learned that, the battery control unit BCU may control the battery unit based on the temperature, the voltage, and the current of the battery unit, to implement intelligent float charging of the battery unit, thereby prolonging a lifespan of the battery unit, and further prolonging the lifespan of the entire energy storage system.

Further, the battery unit (for example, the battery unit BC 1) may include one or more cells. When the battery unit includes a plurality of cells, the plurality of cells may be connected in a manner of only parallel connection, only series connection, or series and parallel connection.

Optionally, in addition to intelligent float charging performed on the plurality of battery units by using the battery control unit BCU, intelligent float charging may be implemented on an entire battery system by controlling the battery control unit BCU by a master computer coupled to the energy storage system.

In this embodiment of this application, the obtaining module may determine the lower state of charge limit and the upper state of charge limit of the energy storage system based on the state of health of the energy storage system, the first determining module may determine the lower charging voltage limit based on the lower state of charge limit, the second determining module determines the upper charging voltage limit based on the upper state of charge limit of the energy storage system, and the control module controls the charging voltage based on the lower charging voltage limit and the upper charging voltage limit, to maintain the charging voltage between the lower charging voltage limit and the upper charging voltage limit, perform intermittent float charging on the energy storage system, reduce the charging voltage of the energy storage system, and control intercalation/deintercalation of the electrode material inside the energy storage module (when the energy storage module is charged, positive lithium ions deintercalate to release electrons, and negative lithium ions intercalate to obtain electrons; on the contrary, when the energy storage module is discharged, the positive lithium ions intercalate to obtain electrons, and the negative lithium ions deintercalate to release electrons), thereby reducing activity of the side reaction on a surface of the electrode material, prolonging the lifespan of the energy storage system, improving safety of the energy storage system, and reducing maintenance costs of the energy storage system. In addition, according to the control apparatus provided in this embodiment of this application, the energy storage system can run in a relatively low state of charge (that is, 60% to 65%), thereby improving safety of the energy storage system.

An embodiment of this application further provides an electronic device, which may include:
one or more processors; and
a memory, configured to store one or more programs, where
when the one or more programs are executed by the one or more processors, the foregoing control method is implemented.

In addition, an embodiment of this application further provides a computer-readable storage medium. The computer-readable storage medium stores instructions. When the instructions are run on a computer, the instructions are used to perform the foregoing control method.

In addition, this application provides a computer program. The computer program includes instructions. When the instructions are run on a computer or a processor, the computer or the processor is enabled to implement the foregoing control method.

The control apparatus, the electronic device, the computer-readable storage medium, and the computer program that are provided in embodiments of this application are all configured to perform the corresponding control method provided above. Therefore, for beneficial effects that can be achieved by them, refer to the beneficial effects in the corresponding control method provided above. Details are not described herein again.

It should be understood that in embodiments of this application, sequence numbers of the foregoing processes do not mean particular execution sequences. The execution sequences of the processes should be determined based on functions and internal logic of the processes, and should not be construed as any limitation on the implementation processes of the embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or a part contributing to a conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc. The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
determining a lower state of charge limit of an energy storage system based on a state of health of the energy storage system through a multiplication operation, and obtaining an upper state of charge limit of the energy storage system based on a preset state of charge threshold, wherein the preset state of charge threshold indicates a difference between the upper state of charge limit and the lower state of charge limit;
determining a lower charging voltage limit of the energy storage system based on the lower state of charge limit and a preset correspondence between a state of charge and a charging voltage;
determining an upper charging voltage limit of the energy storage system based on the upper state of charge limit and the correspondence between a state of charge and a charging voltage; and
controlling a charging voltage of the energy storage system based on the lower charging voltage limit and the upper charging voltage limit.

2. The control method according to claim 1, wherein the determining a lower state of charge limit of an energy storage system based on a state of health of the energy storage system through a multiplication operation comprises:
obtaining a backup time of the energy storage system, a rated capacity of the energy storage system, and active power of a load connected to the energy storage system; and
determining the lower state of charge limit based on the backup time of the energy storage system, the rated capacity of the energy storage system, the active power of the load, and the state of health of the energy storage system through the multiplication operation.

3. The control method according to claim 1 or 2, wherein the controlling a charging voltage based on the lower charging voltage limit and the upper charging voltage limit comprises:
controlling, based on control information, the energy storage system to be charged, and when the charging voltage reaches the upper charging voltage limit, stopping charging of the energy storage system, wherein the control information indicates that the energy storage system needs to be charged; and
when the charging voltage falls back to the lower charging voltage limit, controlling the energy storage system to be charged, and when the charging voltage reaches the upper charging voltage limit, stopping charging of the energy storage system.

4. The control method according to any one of claims 1 to 3, wherein the control method further comprises:
obtaining the state of health of the energy storage system by using an ampere-hour integral method or a Kalman filtering method.

5. The control method according to any one of claims 1 to 4, wherein the control method further comprises:
obtaining a current state of charge of the energy storage system by using the ampere-hour integral method or the Kalman filtering method.

6. The control method according to claim 5, wherein the control method further comprises:
determining the charging voltage of the energy storage system based on the current state of charge of the energy storage system and the correspondence between a state of charge and a charging voltage.

7. The control method according to claim 3, wherein the energy storage system comprises a plurality of battery units, a plurality of battery management units, and a battery control unit, and the plurality of battery units are connected in series to the plurality of battery management units in a one-to-one manner;
an input end of each battery management unit is connected to a corresponding battery unit, an output end of each battery management unit is connected to an input end of the battery control unit, and an output end of the battery control unit is connected to each battery unit;
each battery management unit is configured to: obtain running information of the corresponding battery unit, and output the running information to the battery control unit, wherein the running information of the battery unit comprises at least one of a temperature, a current, and a voltage of the battery unit;
the battery control unit is configured to: determine the control information based on running information of each battery unit, and output the control information to each battery unit; and
each battery unit is configured to be charged based on the control information.

8. The control method according to claim 7, wherein the plurality of battery units are connected in parallel and/or in series.

9. A control apparatus, comprising:
an obtaining module, configured to: determine a lower state of charge limit of an energy storage system based on a state of health of the energy storage system through a multiplication operation, and obtain an upper state of charge limit of the energy storage system based on a preset state of charge threshold, wherein the preset state of charge threshold indicates a difference between the upper state of charge limit and the lower state of charge limit;
a first determining module, configured to determine an upper charging voltage limit of the energy storage system based on the lower state of charge limit and a preset correspondence between a state of charge and a charging voltage;
a second determining module, configured to determine an upper charging voltage limit of the energy storage system based on the upper state of charge limit and the correspondence between a state of charge and a charging voltage; and
a control module, configured to control a charging voltage of the energy storage system based on the lower charging voltage limit and the upper charging voltage limit.

10. The control apparatus according to claim 9, wherein the obtaining module is configured to:
obtain a backup time of the energy storage system, a rated capacity of the energy storage system, and active power of a load connected to the energy storage system; and
determine the lower state of charge limit based on the backup time of the energy storage system, the rated capacity of the energy storage system, the active power of the load, and the state of health of the energy storage system through the multiplication operation.

11. The control apparatus according to claim 9 or 10, wherein the control module is configured to:
control, based on control information, the energy storage system to be charged, and when the charging voltage reaches the upper charging voltage limit, stop charging of the energy storage system, wherein the control information indicates that the energy storage system needs to be charged; and
when the charging voltage falls back to the lower charging voltage limit, control the energy storage system to be charged, and when the charging voltage reaches the upper charging voltage limit, stop charging of the energy storage system.

12. The control apparatus according to any one of claims 9 to 11, wherein the obtaining module is further configured to:
obtain the state of health of the energy storage system by using an ampere-hour integral method or a Kalman filtering method.

13. The control apparatus according to any one of claims 9 to 12, wherein the obtaining module is further configured to:
obtain a current state of charge of the energy storage system by using the ampere-hour integral method or the Kalman filtering method.

14. The control apparatus according to claim 13, wherein the obtaining module is further configured to:
determine the charging voltage of the energy storage system based on the current state of charge of the energy storage system and the correspondence between a state of charge and a charging voltage.

15. The control apparatus according to claim 11, wherein the energy storage system comprises a plurality of battery units, a plurality of battery management units, and a battery control unit, and the plurality of battery units are connected in series to the plurality of battery management units in a one-to-one manner;
an input end of each battery management unit is connected to a corresponding battery unit, an output end of each battery management unit is connected to an input end of the battery control unit, and an output end of the battery control unit is connected to each battery unit;
each battery management unit is configured to: obtain running information of the corresponding battery unit, and output the running information to the battery control unit, wherein the running information of the battery unit comprises at least one of a temperature, a current, and a voltage of the battery unit;
the battery control unit is configured to: determine the control information based on running information of each battery unit, and output the control information to each battery unit; and
each battery unit is configured to be charged or discharged based on the control information.

16. The control apparatus according to claim 15, wherein information about the battery unit comprises at least one of a temperature, a current, and a voltage of the battery unit; and
the plurality of battery units are connected in parallel and/or in series.

17. An electronic device, comprising:
one or more processors; and
a memory, configured to store one or more programs, wherein
when the one or more programs are executed by the one or more processors, the control method according to any one of claims 1 to 8 is implemented.

18. A computer-readable storage medium, wherein the computer-readable storage medium stores instructions, and when the instructions are run on a computer, the instructions are used to perform the control method according to any one of claims 1 to 8.

19. A computer program, wherein the computer program comprises instructions, and when the instructions are run on a computer or a processor, the computer or the processor is enabled to implement the control method according to any one of claims 1 to 8.
